# FASCICULE DE BREVET EUROPEEN

(11) **EP 0 506 899 B1**
(45) Date de publication et mention de la délivrance du brevet: **14.12.1994**
(21) Numéro de dépôt: 91916911.0
(22) Date de dépôt: 18.09.1991
(51) Int. Cl.: G01L 5/12

(54) **DISPOSITIF DE MESURE D'EFFORTS AXIAUX SUR UNE TIGE**
VORRICHTUNG ZUR MESSUNG DER AXIALBELASTUNGEN EINES SCHAFTES
DEVICE FOR MEASURING AXIAL FORCES APPLIED TO A ROD

(30) Priorité: 19.09.1990 FR 9011555
(43) Date de publication de la demande: 07.10.1992
(73) Titulaire: ELECTRICITE DE FRANCE Service National, 75008 Paris (FR)
(72) Inventeur: GUILLET, Jacques, F-78600 Maisons-Lafitte (FR); CHARRON, Jean-Louis, F-60300 Senlis (FR)
(74) Mandataire: Ilgart, Jean-Christophe
(86) Numéro de dépôt international: FR9100736
(87) Numéro de publication internationale: WO9205417

(56) Documents cités:
- DD-A- 262 281
- GB-A- 2 168 498

## Description

L'invention concerne un dispositif de mesure d'efforts axiaux, de traction ou de compression, sur une tige.

Une application possible pour de tels dispositifs est la mesure d'efforts de manoeuvre dans la tige de commande de certains robinets. Les dispositifs connus permettent de mesurer cet effort directement par l'allongement ou la contraction de la tige ou par l'intermédiaire d'un couple de manoeuvre à la sortie du servomoteur qui commande la tige. Certains de ces dispositifs sont trop fragiles pour être utilisés dans toutes les conditions de fonctionnement envisageables, notamment à haute température, sous irradiation ou en présence de chocs. D'autres exigent de démonter certaines pièces du robinet, ce qui est incompatible avec une mesure pendant le fonctionnément normal. Il existe encore des dispositifs qui permettent de mesurer les efforts par l'intermédiaire d'un paramètre tel que le déplacement de rondelles flexibles d'un limiteur d'efforts. On peut alors choisir des capteurs résistants et qui ne nécessitent aucun démontage de pièces, mais la précision obtenue de cette manière indirecte est insuffisante.

L'objectif fondamental de l'invention est de mesurer directement les efforts axiaux dans la tige par un dispositif robuste et qui ne nécessite pas de démontage de pièces du robinet. Il est d'autre part essentiel que ce dispositif puisse être facilement monté et démonté, ce qui n'est pas le cas des systèmes à jauges de contrainte couramment utilisés pour ce genre de mesure dans d'autres contextes techniques. Une jauge de contrainte est décrite dans GB-A-2 168 498.

Le dispositif est composé sous sa forme la plus générale par deux anneaux formés chacun de deux moitiés assemblées entre elles de manière démontable et serrées sur la tige par une surface intérieure de contact, d'au moins un capteur de mesure de distance sans contact assujetti à un des anneaux, et d'un moyen de mesure permettant de mesurer la distance entre ce capteur et l'autre anneau. Le capteur de mesure de distance est disjoint matériellement de l'autre anneau de sorte qu'aucun effort n'est transmis entre les anneaux qui restent ainsi en place sur la tige qui constitue leur seul moyen de liaison.

On préfère qu'il y ait deux capteurs diamétralement opposés sur les anneaux afin d'éviter les erreurs de mesure produites par des efforts parasites de flexion sur la tige. Une plus grande facilité d'utilisation est offerte si les capteurs assujettis à un anneau sont assujettis à la même moitié d'anneau, ce qui implique que les moitiés des anneaux sont de dimensions inégales.

La réalisation envisagée utilise des capteurs de nature magnétique qui émettent un champ qui se referme sur une cible magnétique. Plus précisément, un capteur comprend un bloc en ferrite contenant une bobine excitée ainsi qu'une autre bobine magnétique de mesure et émet un champ sur une cible constituée d'une pièce magnétique située en vis-à-vis.

La fiabilité des mesures est également accrue si les anneaux comportent une collerette interne s'appuyant sur la tige, de préférence sur une partie opposée à l'autre anneau afin d'obtenir une meilleure sensibilité.

Enfin, le dispositif peut comporter une pièce de montage qui est munie, ainsi qu'une moitié de chacun des anneaux, de moyens de liaison mutuelle démontables et des moyens de positionnement mutuel. On garantit ainsi que les anneaux seront placés à une distance uniforme l'un de l'autre au moment du montage.

L'invention va maintenant être décrite plus en détail à l'aide des figures suivantes annexées à titre illustratif et non limitatif qui décrivent une réalisation préférée de l'invention :

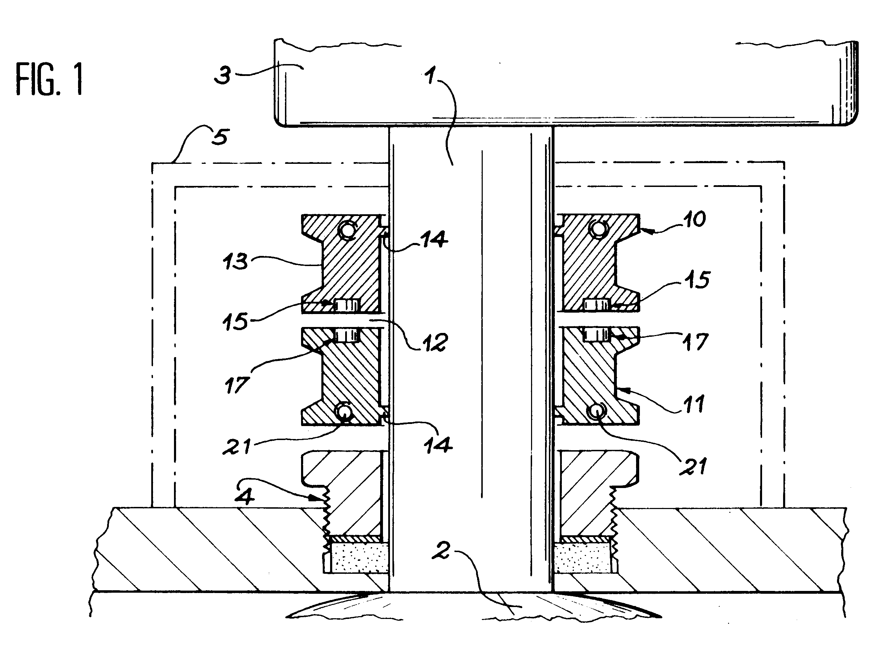

- la figure 1 est une vue du dispositif à l'état monté, selon une coupe diamétrale de la tige ;
- la figure 2 est une vue de dessous de l'anneau supérieur ;
- la figure 3 représente en détail les capteurs utilisés ;
- la figure 4 est une vue radiale de la pièce de montage ; et
- la figure 5 est une vue de dessus de cette pièce.

On mesure les efforts axiaux sur une tige 1 qui appartient, dans l'application envisagée, à un robinet et qui commande un obturateur 2 fixé à une de ses extrémités. La commande est réalisée par un servomoteur 3 à l'autre extrémité de la tige 1. Il s'agit de vérifier périodiquement que le servomoteur 3 peut soumettre la tige 1 à des efforts axiaux suffisants pour pouvoir déplacer l'obturateur 2, notamment contre les frottements et les forces de pression du fluide dont l'obturateur 2 modifie l'écoulement. Dans de tels appareils, il existe normalement un intervalle entre un bâti contenant un presse-étoupe 4, au-delà duquel se trouve l'obturateur 2, et une arcade de maintien 5, au-delà de laquelle se trouve le servomoteur 3. La tige 1 est nue sur cet intervalle. C'est là qu'on monte le dispositif.

Celui-ci se compose d'un anneau supérieur 10 séparé d'un anneau inférieur 11 par un entrefer 12. A quelques détails près, les anneaux 10 et 11 sont semblables et disposés symétriquement de part et d'autre de l'entrefer 12. Chacun d'eux comprend sur sa surface extérieure une empreinte 13 à section trapézoïdale et sur sa surface intérieure une collerette 14 de serrage sur une portion quelconque de la tige 1, qui est parfaitement lisse. La collerette 14 de chaque anneau 10 ou 11 est disposée à l'opposé de l'autre anneau 11 ou 10 afin que la longueur de tige 1 bornée par les collerettes 14 et dont on mesure l'allongement soit aussi grande que possible. Il est par ailleurs utile que la hauteur des collerettes 14 soit réduite, afin d'éviter tout glissement lors de l'allongement ou de la contraction de la tige 1. Il faut cependant éviter de marquer cette dernière par des pressions de contact trop élevées. C'est pourquoi on peut préconiser une hauteur un peu inférieure à 1 mm pour les collerettes 14.

Le dispositif est muni de deux capteurs semblables 15. Chacun de ces capteurs est assujetti à l'anneau supérieur 10. Dans le cas où le matériau constituant l'anneau inférieur 11 n'est pas magnétique, une cible en matériau magnétique est assujettie à cet anneau. Chaque capteur 15 est situé devant l'entrefer 12 et fait face à la cible 17 correspondante.

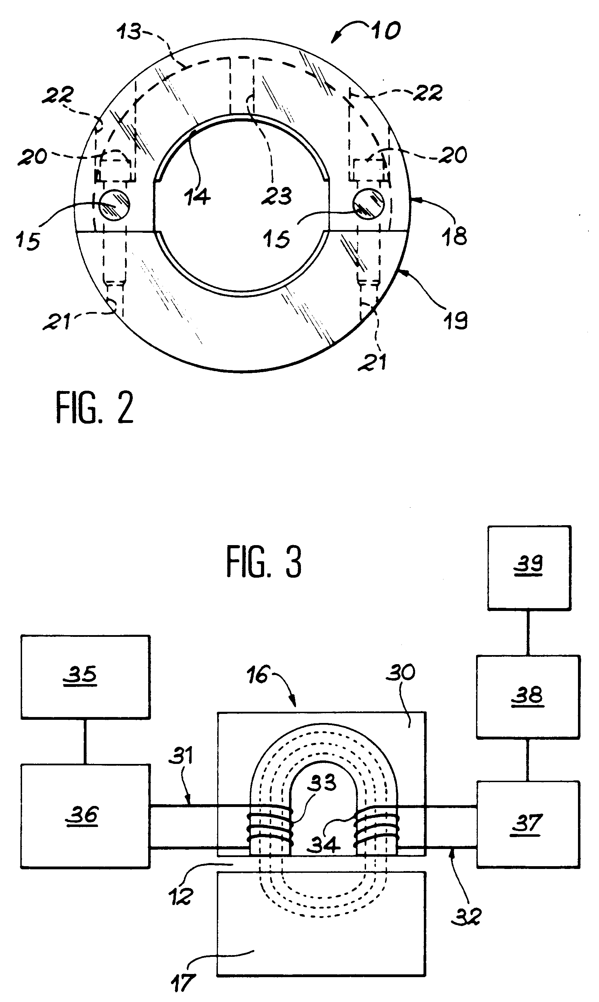

On voit sur la figure 2, qui représente uniquement l'anneau supérieur 10, que celui-ci est constitué de deux moitiés inégales 18 et 19. La moitié la plus grande, appelée moitié de support 18, s'étend sur un peu plus d'une demi-circonférence et porte les deux capteurs 15 qui restent ainsi diamétralement opposées par rapport à la tige 1 avec une bonne précision même si l'assemblage des deux moitiés d'anneau 18 et 19 n'est pas parfait. Cet assemblage est effectué par deux vis 20. Pour cela, la moitié la plus petite ou moitié de bridage 19 est munie de deux taraudages 21 parallèles et tangentiels de part et d'autre de la collerette interne 14, et la moitié de support 18 est munie de deux alésages à lamage 22 qui viennent en face des taraudages 21 au montage. Les vis 20 sont alors introduites dans les alésages à lamage 22 et vissées dans les taraudages 21 jusqu'à ce que les têtes de vis viennent buter au fond des lamages. On utilise avantageusement des vis dites "imperdables" qui comprennent alors une partie non filetée à section plus mince juste sous les têtes 20. Les alésages 22 sont munis de quelques filets à l'endroit que doivent atteindre ces parties non filetées en position de montage. Quand les deux moitiés 18 et 19 ne sont pas assemblées, la crête des filets des vis 20, à la limite de la section plus mince, vient en butée sur les quelques filets des alésages 22, ce qui empêche les vis 20 d'être retirées de la moitié de support 18 à moins de les dévisser, ce qui est impossible autrement que par une action volontaire.

La moitié de support 18 comprend en outre un taraudage 23 radial, central et à mi-hauteur dont l'utilité sera expliquée plus loin.

L'anneau inférieur 11 est exactement semblable sauf pour la cible ferromagnétique 17 qu'il porte.

On va maintenant décrire les capteurs 15 à l'aide de la figure 3. Les parties inférieures 17 sont des petits blocs ferromagnétiques qui constituent une cible. Les capteurs 15 sont plus complexes car ils se composent, outre d'un bloc ou d'un pot 30 en ferrite, d'un circuit primaire 31 et d'un circuit secondaire 32. Chacun des circuits 31 est composé d'un fil s'enroulant en une bobine 33 ou 34 enchâssée dans le pot 30. Le circuit primaire 31 est raccordé à un oscillateur 35 et à un convertisseur de tension en courant 36. Le circuit secondaire 32 est quant à lui raccordé à un amplificateur et à un filtre passe-bande 37, à un démodulateur 38 et à un filtre passe-bas 39. La bobine 33 du circuit primaire 31 provoque un champ magnétique dans le pot en ferrite 30, dont les lignes se referment dans le bloc ferromagnétique pour former des boucles. Les caractéristiques de ce champ dépendent de l'épaisseur de l'entrefer et donc de la réluctance du dispositif magnétique, et elles sont mesurées par la bobine 34 du circuit secondaire 32 qui est plongée dedans.

Si l'amplitude du courant d'alimentation du circuit primaire 31 est constante, la tension de sortie du circuit secondaire 32 dépend de l'allongement de la tige 1 suivant une loi pratiquement hyperbolique. C'est le circuit électronique constitué des éléments 37, 38 et 39 qui linéarise et conditionne cette tension.

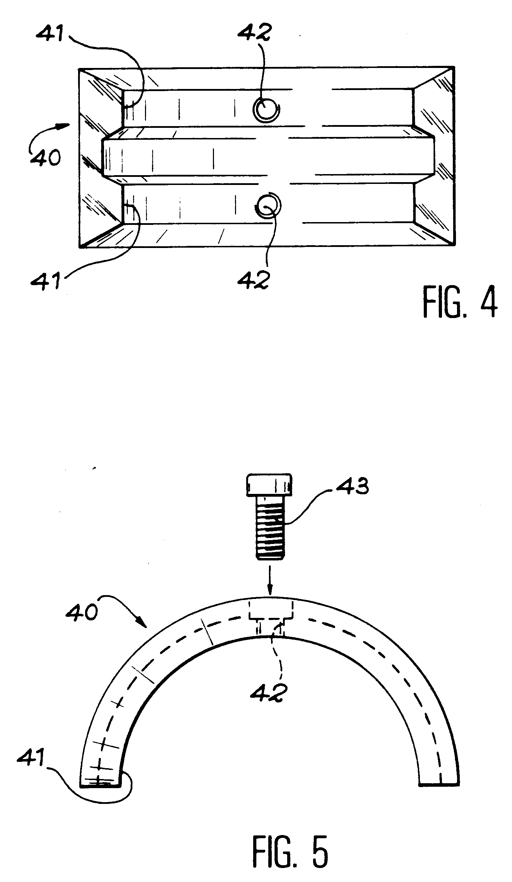

Les figures 4 et 5 représentent une coquille semi-circulaire 40 destinée au montage du dispositif. Elle comporte sur sa face interne deux saillies 41 à section trapézoïdale destinées à pénétrer dans les empreintes 13 des moitiés de support 18, ainsi qu'en son centre de deux perçages radiaux 42 qui débouchent au milieu des saillies 41.

Le montage du dispositif sur la tige 1 est précédé d'une étape dans laquelle les moitiés de support 18 des deux anneaux 10 et 11 sont vissées sur la coquille 40 à l'aide de vis 43 engagées dans les perçages 42 et les taraudages 23, de manière que les saillies 41 pénètrent dans les empreintes 13 et que les moitiés de support 18 soient ainsi bloquées. Cette disposition permet de garantir le parallélisme des moitiés de support 18 à un écartement bien défini et invariable. L'ensemble est alors rapproché de la tige 1 et plaqué contre elle jusqu'à ce que les collerettes internes 14 la touchent. Il est alors possible d'assembler les moitiés de bridage 19 l'une après l'autre sur les moitiés de support 18. Les anneaux 10 et 11 sont alors fermement maintenus sur la tige 1, et il est possible de retirer la coquille 40 et de commencer les mesures.

D'autres constructions du dispositif sont possibles. On peut en particulier envisager des capteurs autres que magnétiques : capacitifs, optiques, à courants de Foucault ou à ultrasons en particulier. De tels capteurs permettent comme les capteurs inductifs d'éviter toute liaison mécanique entre les anneaux, par un élément disponible porteur d'une jauge d'extensométrie par exemple, qui pourrait être imprécise à la suite d'un mauvais montage et perturber les déformations d'ensemble à cause de la dissymétrie qu'elle introduirait dans le système.

Les anneaux disjoints et serrés sur une tige lisse par le frottement d'une surface interne peuvent être montés et démontés facilement à des endroits différents de la tige pour parvenir à la mesure la plus commode.

## Revendications

1. Dispositif de mesure d'efforts axiaux sur une tige (1), comprenant deux anneaux (10, 11) formés chacun de deux moitiés (18, 19) assemblées entre elles de manière démontable et serrées sur la tige par une surface intérieure de contact (14), au moins un capteur (15) assujetti à l'un des anneaux uniquement, caractérisé par un moyen de mesure (31, 32) permettant de mesurer la distance (12) entre le capteur et l'autre anneau, les anneaux étant liés entre eux uniquement par la tige.

2. Dispositif de mesure d'efforts suivant la revendication 1, caractérisé en ce qu'il comprend deux capteurs (15) diamétralement opposés sur l'anneau (10).

3. Dispositif de mesure d'efforts suivant la revendication 2, caractérisé en ce que les moitiés des anneaux sont de dimensions inégales, les capteurs assujettis à l'anneau supérieur étant assujettis à la même moitié d'anneau.

4. Dispositif de mesure d'efforts suivant la revendication 1, caractérisé en ce que les moitiés des anneaux sont liées l'une à L'autre par des vis dont l'élasticité longitudinale assure un maintien constant des anneaux sur la tige quand celle-ci s'allonge ou se contracte sous l'effet des efforts qui lui sont appliqués.

5. Dispositif de mesure d'efforts suivant la revendication 1, caractérisé en ce que les capteurs (15) sont des capteurs de déplacements linéaires sans contacts.

6. Dispositif de mesure d'efforts suivant la revendication 5, caractérisé en ce que les capteurs (15) peuvent être de type inductif, capacitif, optique, à courants de Foucault ou bien à ultrasons.

7. Dispositif de mesure d'efforts suivant la revendication 1, caractérisé en ce que les anneaux (10, 11) comportent une collerette interne (14) s'appuyant sur la tige.

8. Dispositif de mesure d'efforts suivant la revendication 7, caractérisé en ce que la collerette interne (14) est située, pour chaque anneau, sur une partie opposée à l'autre anneau.

9. Dispositif de mesure d'efforts suivant la revendication 1, caractérisé en ce qu'il comporte une pièce de montage (40), la pièce de montage et une moitié de chacun des anneaux étant munies de moyens de liaison mutuelle démontables (42, 43, 23) et de moyens de positionnement mutuel (41, 13).

10. Dispositif de mesure d'efforts suivant la revendication 9, caractérisé en ce que la pièce de montage (40) comporte des saillies (41) de section trapézoïdale qui pénètrent dans les empreintes (13) des anneaux.

## Patentansprüche

1. Vorrichtung zur Messung der Axialbelastungen eines Schaftes (1), umfassend zwei Ringe (10, 11), jeder gebildet durch zwei Hälten (18, 19), zusammengebaut auf lösbare Weise und auf dem Schaft festgeklemmt mittels einer Kontakt-Innenfläche (14), wenigstens einen Aufnehmer (15), nur an einem der Ringe befestigt,
**gekennzeichnet** durch eine Meßeinrichtung (31, 32), die ermöglicht, den Abstand (12) zwischen dem Aufnehmer und dem anderen Ring zu messen, wobei die Ringe nur über den Schaft miteinander verbunden sind.

2. Belastungsmeßvorrichtung nach Anspruch 1, dadurch gekennzeichnet, daß sie zwei auf dem Ring (10) diametral gegenüberliegende Aufnehmer (15) umfaßt.

3. Belastungsmeßvorrichtung nach Anspruch 2, dadurch gekennzeichnet, daß die Ringhälften ungleiche Abmessungen aufweisen, wobei die an dem oberen Ring befestigten Aufnehmer an derselben Ringhälfte befestigt sind.

4. Belastungsmeßvorrichtung nach Anspruch 1, dadurch gekennzeichnet, daß die Ringhälften miteinander verbunden sind durch Schrauben, deren Elastizität in Längsrichtung einen konstanten Halt der Ringe auf dem Schaft gewährleisten, wenn dieser sich dehnt oder schrumpft unter der Wirkung von Kräften, die auf ihn ausgeübt werden.

5. Belastungsmeßvorrichtung nach Anspruch 1, dadurch gekennzeichnet, daß die Aufnehmer (15) kontaktfreie Linearbewegungsaufnehmer sind.

6. Belastungsmeßvorrichtung nach Anspruch 5, dadurch gekennzeichnet, daß die Aufnehmer (15) vom induktiven, kapazitiven, optischen Typ und Wirbelstrom- oder auch Ultraschall-Typ sein können.

7. Belastungsmeßvorrichtung nach Anspruch 1, dadurch gekennzeichnet, daß die Ringe (10, 11) einen Innenbund (14) aufweisen, der sich auf dem Schaft abstützt.

8. Belastungsmeßvorrichtung nach Anspruch 7, dadurch gekennzeichnet, daß der Innenbund (14) sich bei jeden Ring auf einem dem anderen Ring entgegengesetzten Teil befindet.

9. Belastungsmeßvorrichtung nach Anspruch 1, dadurch gekennzeichnet, daß sie ein Montageteil (40) umfaßt, wobei das Montageteil und eine Hälfte von jedem der Ringe versehen ist mit lösbaren Einrichtungen zur gegenseitigen Verbindung (42, 43, 23) und Einrichtungen zur gegenseitigen Positionierung (41, 13).

10. Belastungsmeßvorrichtung nach Anspruch 9, dadurch gekennzeichnet, daß das Montageteil (40) Vorsprünge (41) mit trapezförmigem Querschnitt aufweist, die eindringen in die Vertiefungen (13) der Ringe.

## Claims

1. Apparatus for measuring axial stresses on a rod (1), comprising two rings (10, 11), each formed by two halves (18, 19) assembled in dismantlable manner with one another and fitted to the rod by an internal contact surface (14), at least one sensor (15) fixed to one of the rings only, characterized by a measuring means (31, 32) making it possible to measure the distance (12) between the sensor and the other ring, the rings being interconnected by the rod only.

2. Stress measuring apparatus according to claim 1, characterized in that it comprises two diametrically opposite sensors (15) on the ring (10).

3. Stress measuring apparatus according to claim 2, characterized in that the halves of the rings have unequal dimensions, the sensors fixed to the upper ring being fixed to the same ring half.

4. Stress measuring apparatus according to claim 1, characterized in that the halves of the rings are interconnected by screws, whose longitudinal elasticity ensures a constant holding of the rings on the rod when the latter is elongated or contracts under the effect of the stresses applied thereto.

5. Stress measuring apparatus according to claim 1, characterized in that the sensors (15) are contact-free, linear displacement sensors or transducers.

6. Stress measuring apparatus according to claim 5, characterized in that the sensors (15) can be inductive, capacitive, optical, eddy current or ultrasonic.

7. Stress measuring apparatus according to claim 1, characterized in that the rings (10, 11) have an internal collar (14) bearing on the rod.

8. Stress measuring apparatus according to claim 7, characterized in that the internal collar (14) is located, for each ring, on a part opposite to the other ring.

9. Stress measuring apparatus according to claim 1, characterized in that it has a fitting part (40), said fitting part and half of each of the rings being provided with dismantlable, mutual connecting means (42, 43, 23) and mutual positioning means (41, 13).

10. Stress measuring apparatus according to claim 9, characterized in that the fitting part (40) has projections (41) with a trapezoidal cross-section, which penetrate the indentations (13) of the rings.
